# EUROPÄISCHE PATENTSCHRIFT

(11) **EP 0 636 056 B1**
(45) Veröffentlichungstag und Bekanntmachung des Hinweises auf die Patenterteilung: **04.06.1997**
(21) Anmeldenummer: 93905212.2
(22) Anmeldetag: 23.03.1993
(51) Int. Cl.: B23Q 3/155, B65G 17/32

(54) **KETTENMAGAZIN ZUR AUFNAHME VON BEARBEITUNGSWERKZEUGEN**
CHAIN MAGAZINE FOR HOLDING MACHINING TOOLS
MAGASIN A CHAINE POUR LOGER DES OUTILS D'USINAGE

(30) Priorität: 27.03.1992 DE 9204131 U
(43) Veröffentlichungstag der Anmeldung: 01.02.1995
(73) Patentinhaber: KOPP WERKZEUGMASCHINEN GmbH, D-89231 Neu-Ulm (DE)
(72) Erfinder: KLICPERA, Udo, D-8962 Pfronten (DE)
(74) Vertreter: Allgeier, Kurt
(86) Internationale Anmeldenummer: DE9300261
(87) Internationale Veröffentlichungsnummer: WO9319893

(56) Entgegenhaltungen:
- CH-A- 670 698
- DE-A- 2 000 779
- GB-A- 2 207 738
- SU-A- 990 469

## Beschreibung

Die Erfindung bezieht sich auf ein Kettenmagazin zur Aufnahme von Bearbeitungswerkzeugen für Bearbeitungsmaschinen, insbesondere Werkzeugmaschinen. Kettenmagazine dieser Art bestehen im wesentlichen aus einer Endloskette mit Werkzeugaufnahmen und wenigstens zwei Kettenrädern sowie an die Teilkreisdurchmesser der Umlenk-Kettenräder anschliessenden Führungselementen für die Kettenglieder.

Derartige Kettenmagazine sind bekannt, beispielsweise durch die DE-OS 20 00 779. Bei dem dort gezeigten Kettenmagazin sind die die Kettenglieder verbindenden Gelenke hohlzylindrisch geformt und als Werkzeugaufnahmen ausgebildet, was zur Folge hat, dass die Werkzeuge nur in Richtung der Gelenkachsen der die Kettenglieder verbindenden Hohlzylinder eingesetzt bzw. entnommen werden können.

Der letztgenannte Nachteil wird bei einem Kettenmagazin nach der DE 25 25 212 A1 vermieden. Dort sind die Werkzeugaufnahmen an Kettenlaschen angeordnet, welche durch Aufnahme freier Kettenlaschen miteinander gelenkig verbunden sind. Die Mittellaschen der Werkzeugaufnahmen beschreiben daher Bahnkurven, die einen erheblichen Abstand von den Bahnkurven der Kettenbolzen aufweisen. Wegen der freien Zwischenlaschen ist die Aufnahmekapazität auf die Hälfte der vorhandenen Kettenglieder beschränkt. Vor allem ist auch nachteilig, dass wegen des Abstands der Bewegungsbahn der Werkzeuge von der Bahnkurve der eigentlichen Kette besonders beim Anfahren und Bremsen hohe Momente auftreten, was vermieden werden sollte.

Die DE 34 31 091 C2 zeigt ein gattungsgemässes Magazin, bei dem jede Kettenlasche mittig zwischen den Bolzen mit einer Werkzeugaufnahme versehen ist. Wenn auch dort die Bewegungsbahn der Achsen der Werkzeugaufnahmen näher an die Bahnkurve der Kette gerückt ist, so bleibt immer noch ein nachteiliger und Eigenbewegungsmomente der Werkzeuge hervorrufender Abstand übrig.

Es besteht daher die Aufgabe, ein derartiges Kettenmagazin für Bearbeitungsmaschinen zu schaffen, bei welchem die Achsen der Werkzeugaufnahmen genau in der Bahnkurve der Kette verlaufen und welches die Entnahme der Werkzeuge in Querrichtung zu den Achsen der Werkzeuge bzw. der Werkzeugaufnahmen ermöglicht.

Ausgehend von einem gattungsgemässen Kettenmagazin weist die erfindungsgemässe Lösung folgende Merkmale auf:
a) aus einem Stegteil und zwei beidendig mit diesem verbundene, die Kettengelenke bildenden Hohlhülsen unterschiedlichen Durchmessers gebildete Kettenglieder,
b) in den sich mit leichtem Bewegungsspiel gegenseitig umschliessenden Hohlhülsen coaxial zu den Gelenkachsen (Z) angeordnete Aufnahmevorrichtungen für Bearbeitungswerkzeuge, sowie
c) auf die Mittelachsen der Aufnahmevorrichtungen ausgerichtete beabstandete Parallelflächen aufweisende, schachtähnliche Ausschnitte in jeder der Hohlhülsen, welche in der jeweiligen Zuführungs- bzw. Entnahmestellung des Kettengelenks einen offenen Zuführ- bzw. Entnahmekanal bilden.

Der der Erfindung zu Grunde liegende Gedanke geht aus von der Überlegung, dass grosse auf die Kettenglieder und die in die Aufnahmevorrichtungen eingesetzten Werkzeuge wirkende Beschleunigungskräfte vermieden werden müssen. Diese Kräfte und Momente treten vor allem durch Beschleunigungssprünge bei dem Übergang von einem geraden in einen gekrümmten Teilbereich der Kettenförderung und umgekehrt auf und nehmen mit quadratischer Abhängigkeit bei erhöhter Transportgeschwindigkeit zu. Daher ist es vorteilhaft, wenn die Werkzeugachse mit der Kettengelenkachse zusammenfällt. Wenn die Gelenkachse der Kette nicht mit der Bewegungsbahn der Werkzeuge zusammenfällt treten, insbesondere bei grossen Transportgeschwindigkeiten, sehr hohe Beschleunigungskräfte und Momente auf, die einen vorzeitigen Verschleiss der Kette oder der Aufnahmevorrichtung zur Folge haben.

Ferner ist das Zusammenfallen von Werkzeug- und Kettengelenkachse vorteilhaft, weil hierdurch eine dichte Beladung der Kette mit gering beabstandeten Werkzeugen und dennoch extrem kleinen Kurvenradien realisierbar ist. Bei einem Kettenmagazin gemäss der DE 34 31 091 C2 treten durch den in gekrümmten Teilbereichen, beispielsweise im Bereich der Kettenräder, sekantenförmig nach innen gerichteten Verlauf der Stegteile einerseits wegen des Abweichens der Bewegungsbahn der Werkzeugachsen von der Bewegungsbahn der Kettenglieder erhöhte Beschleunigungskräfte und Momente auf, und andererseits ist der kleinstmögliche Kurvenradius durch die notwendigen Abstände der Werkzeuge beschränkt. Der Teilungsabtand der Kettenglieder ist beim erfindungsgemässen Kettenmagazin durch den grössten Werkzeugdurchmesser bestimmt. Die Umlenkkettenräder können bis auf zwei Kettenzähne reduziert werden. Es sind Transportgeschwindigkeiten von bis zu 100 m/min oder darüber möglich, ohne dass die Beschleunigungs- und Fliehkräfte und Momente zu gross werden. Dadurch werden sehr kurze Werkzeugwechselzeiten ermöglicht.

Die Zuführungs- bzw. Entnahmestellung des Kettengelenks ist an die maschinenseitigen Anforderungen anpassbar. Je nach dem, in welcher Stellung der aneinandergrenzenden Kettenglieder die Ausschnitte in den Hohlhülsen zur Deckung kommen und dadurch den Zuführ- bzw. Entnahmekanal bilden ist die Entnahme des Werkzeugs auf einem geraden oder abgewinkelten Teilbereich des Kettenverlaufs möglich.

Eine wesentliches Ausbildungsmerkmal der Erfindung besteht darin, dass die jeweilige (äussere), in die Zahnlücken des Kettenrades eingreifende Hohlhülse, welche die (innere) Hohlhülse kleineren Durchmessers umschliesst, auf einem Sektor ihres Umfanges eine Ausnehmung von der Dicke des Stegteils aufweist.

Die Ausnehmung ermöglicht die gegenseitige gelenkige Verdrehbarkeit aneinander anschliessender Kettenglieder bei gleichzeitig gleichachsigem gestrecktem Verlauf der Stegteile.

Ein weiteres Ausbildungsmerkmal kann darin bestehen, dass die Kettenräder aus zwei beabstandeten Kettenradscheiben bestehen, in welche die beidseitigen freien (äusseren) Hohlhülsen grösseren Durchmessers eingreifen und zwischen denen die Stegteile der Kette laufen. Hieraus ergibt sich der Vorteil einer verbesserten, Momente aufnehmenden und richtungsstabileren Kettenführung.

Vorteilhafterweise sind die gelenkbildenden, in die Lücken zwischen den Kettenradzähnen eingreifenden Hohlhülsen mit dem Stegteil einstückig verbunden. Diese Ausbildung erlaubt einen wenig aufwendigen Zusammenbau der Kette.

Es kann auch vorgesehen sein, dass die gelenkbildenden, in die Lücken zwischen den Kettenradzähnen eingreifenden Hohlhülsen mittels eines aus zwei beabstandeten Laschen bestehenden Stegteils miteinander verbunden sind, so dass die beiden Stegteile der Kettenglieder beidseitig das Kettenrad umgeben.

Nach einem weiteren vorteilhaften Merkmal wird vorgeschlagen, dass die Stegteile mit Führungsrollen versehen sind. Diese dienen in an sich bekannter Weise zur richtungsstabilisierten Führung der Kette entlang von Führungsschienen.

Das Kettenmagazin ist in ebenfalls bekannter Weise mit Klemmorganen zur lösbaren Halterung des Werkzeugschafts- oder kegels in den Aufnahmevorrichtungen für die Bearbeitungswerkzeuge versehen.

Zweckmässig kann es zur Verschleissminderung der Gelenke von Vorteil sein, wenn die jeweils äussere, die innere Hohlhülse kleineren Durchmessers umschliessende (grössere) Hohlhülse mit von den Zahnlücken der Kettenräder aufgenommenen Laufrollen versehen sind.

Die Vorteile eines Kettenmagazins nach der Erfindung gegenüber dem Stand der Technik bestehen in der Entnahmemöglichkeit der Werkzeuge in Querrichtung zu den Achsen der Werkzeuge an einer beliebigen Stelle eines geraden oder gekrümmten Teilbereichs des Kettenverlaufs und vor allem auch in der dichten Beladungsmöglichkeit der Kette mit Werkzeugen bei zugleich kurzen Kettengliedern und engen Kurvenverläufen, sowie in der Möglichkeit, sehr hohe Transportgeschwindigkeiten zur Erzielung kürzester Werkzeugwechselzeiten zu fahren bei Vermeidung unerwünscht hoher Beschleunigungs- und Fliehkräfte und Momente.

Die folgenden Ausführungsbeispiele der Erfindung lassen weitere vorteilhafte Merkmale und Besonderheiten erkennen, die anhand der schematischen Darstellungen in den Zeichnungen im folgenden näher beschrieben und erläutert sind.

Es zeigen
- Fig. 1: in perspektiver Darstellung ein Kettenglied mit den beidseits jeweils angelenkten Kettengliedern in Teil-Darstellung;
- Fig. 2: einen Schnitt A-B durch das in Fig. 1 dargestellte Kettenglied;
- Fig. 3: einen Schnitt C-D durch das in Fig. 1 dargestellte Kettenglied;
- Fig. 4: eine perspektivische Darstellung des Teils des Kettenmagazins, welches um ein vierzähniges Zweischeiben-Kettenrad geführt ist;
- Fig. 5: eine schematische Seitenansicht auf die Darstellung gemäss Fig. 4;
- Fig. 6: einen schematischen Schnitt E-F durch die Darstellung gemäss Fig. 5;
- Fig. 7: ein Kettenglied in einer ersten Ausführung;
- Fig. 8: ein Kettenglied in einer zweiten Ausführung;
- Fig. 9: ein Kettenglied in einer dritten Ausführung;
- Fig. 10: eine Seitenansicht gemäss Fig. 6 mit zwei Entnahmerichtungen;
- Fig. 11: eine Seitenansicht gemäss Fig. 6 mit einer Entnahmerichtung;
- Fig. 12: eine Seitenansicht gemäss Fig. 6 mit zwei Entnahmerichtungen;

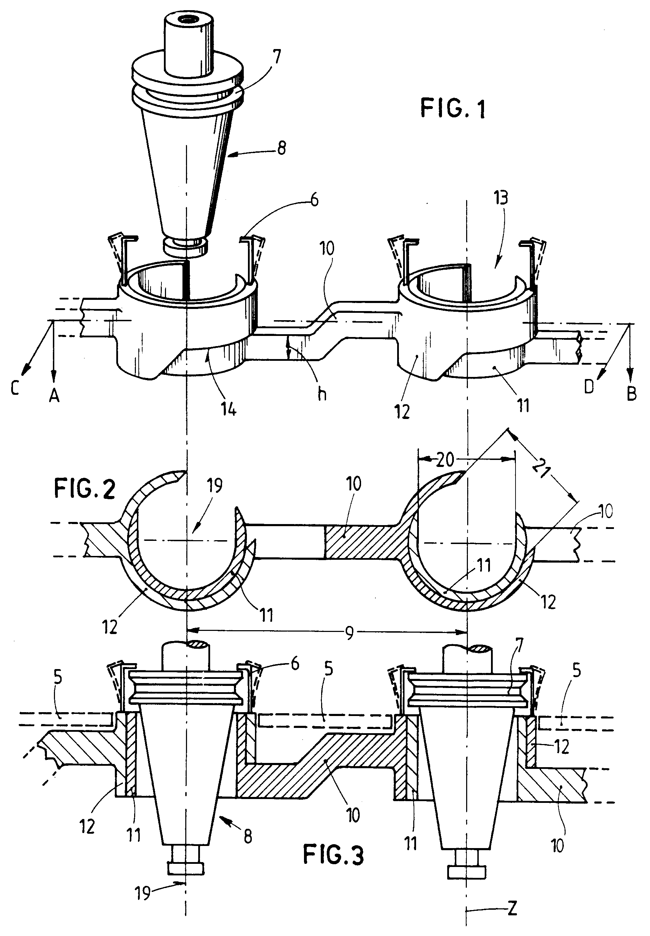

Wie aus Fig. 1 ersichtlich ist, werden die Gelenke 13 von jeweils zwei aneinander gekuppelten Kettengliedern 9 durch jeweils zwei ineinandergleitenden, sich gegenseitig führenden Hohlhülsen 11, 12 gebildet, die mittels der Stegteile 10 verbunden sind. Diese Verbindung kann einstückig sein, wie dargestellt, jedoch auch mehrteilig, z. B. durch zwei einen Zwischenraum freilassenden Laschen. Wie ferner aus Fig. 1 hervorgeht, ist im Ausführungsbeispiel das Stegteil 10 gekröpft, um die Axialerstreckung der Hohlhülsen 11, 12 kürzer halten zu können und trotzdem Raum für den Eingriff der Kettenradzähne 5 - Darstellung in Fig. 3 - zu schaffen.

Weiterhin ist in Fig. 1 das einzusetzende Werkzeug 8 mit der Greiferrille 7 erkennbar, in welche (siehe Fig. 3) die Klemmorgane 6 eingreifen.

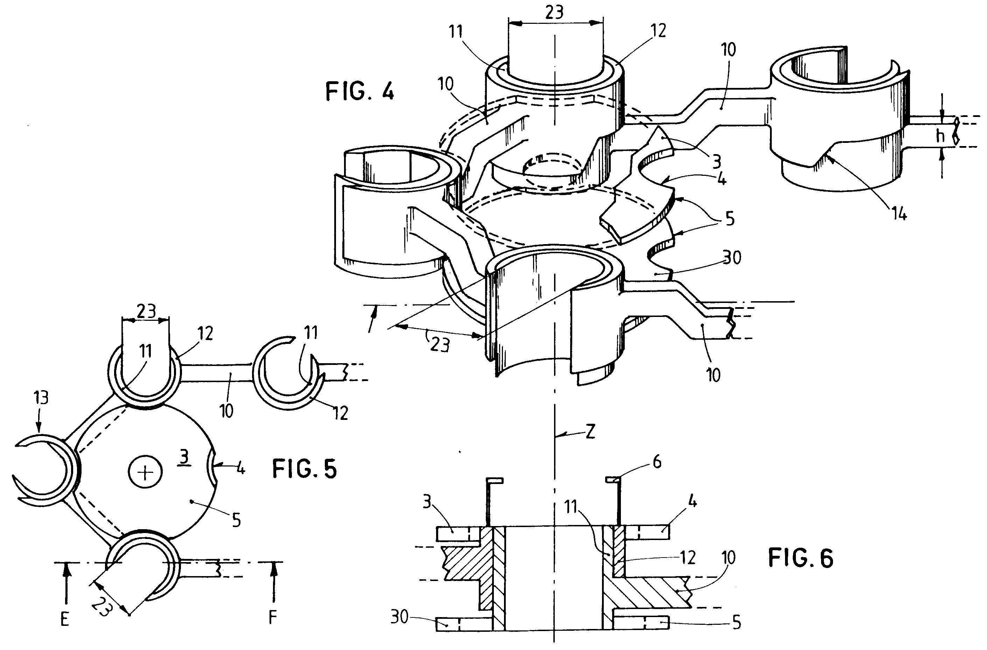

Im Sektor 14 der äusseren, die innere Hohlhülse 11 kleineren Durchmessers umschliessende Hohlhülse 12 ist eine Ausnehmung von der Dicke h des Stegteils 10 angebracht. Diese ermöglicht eine Auslenkung des Stegteils 10 des anschliessenden Kettenglieds 9; diese Auslenkung beträgt beispielsweise bei dem in Fig. 6 dargestellten vierzähnigen Kettenrades 3 45°; bei einem sechszähnigen Kettenrad wäre diese Auslenkung 30°.

Der Schnitt A-B gemäss Fig. 2 in axialer Sicht (Werkzeugachse z) bzw. Achsenkreuz 19 die ineinandergreifenden Hohlhülsen 11, 12 die mittels des Stegteils 10 verbunden sind. Ferner sind die durch die Parallelflächen gebildeten Ausschnitte 20 der Hohlhülse 11 und 21 der Hohlhülse 12 erkennbar, die bei übereinstimmenden Verlauf - siehe Fig. 4 und 5 - den Zuführ- bzw. Entnahmekanal 23 für das Werkzeug 8 bilden.

In Fig. 3 ist das Kettenglied 9 in Schnittdarstellung C-D gezeigt; die dargestellten Elemente sind mit den bereits genannten Bezugszeichen versehen und es ist gestrichelt angedeutet, in welchem Bereich die Zähne 5 eines einscheibenförmigen Kettenrades die Hohlhülsen 12 teilweise umgreifen.

Die Darstellung Fig. 4 lässt erkennen, wie vier Kettenglieder 9 von einem aus den Scheiben 3 und 30 bestehendes Zwischenkettenrad erfasst sind, bei dem die Kettenradzähne mit 5 und die Zahnlücken mit 4 bezeichnet sind. Es ist erkennbar, dass in zwei Positionen Zuführungs- und Entnahmestellungen 23 Zu/En für Werkzeuge erreicht werden, wenn - siehe Fig. 12 - die beispielsweise in Fig. 9 dargestellten Ausschnitte 20, 21 angeordnet werden.

Die Ansicht gemäss Fig. 5 zeigt das Ausführungsbeispiel nach Fig. 4 in Seitenansicht. Hier ist bei einem Beispiel mit einem vierzähnigen Kettenrad deutlicher erkennbar, dass eine erste Zuführ- bzw. Entnahmestellung Zu/En Entnahmekanal 23 - in einem Winkel von 90° zu Geradelaufrichtung der Kette 2 und eine zweite Zuführ- bzw. Entnahmestellung Zu/En in einem Winkel von 135° zur Geradelaufrichtung der Kette 2 besteht, und zwar in Abhängigkeit von den gewählten Winkelstellungen α und β der Ausschnitte 20, 21 in den Hohlhülsen 11, 12.

Der Schnitt E-F gem. Fig. 5, dargestellt in Fig. 6, lässt bei dem Beispiel gemäss Fig. 4 erkennen, dass die Scheiben 30 und 3 des Kettenrades mit ihren Kettenradzähnen bzw. Zahnlücken 4, 5 beidseitig in die Hohlhülsen 11, 12 der Kettenglieder 9 eingreifen.

Die Darstellungen 7 bis 12 zeigen drei Konfigurationen von Kettengliedern 9 für ein Kettenmagazin nach der Erfindung mit vierzähnigen Kettenrädern nach den Ausführungsbeispielen der Fig. 1 bis 6. Diese Konfigurationen zeichnet sich durch einen sehr geringen Raumbedarf aus und ermöglicht eine exakte Führung der Werkzeuge in dem Magazin.

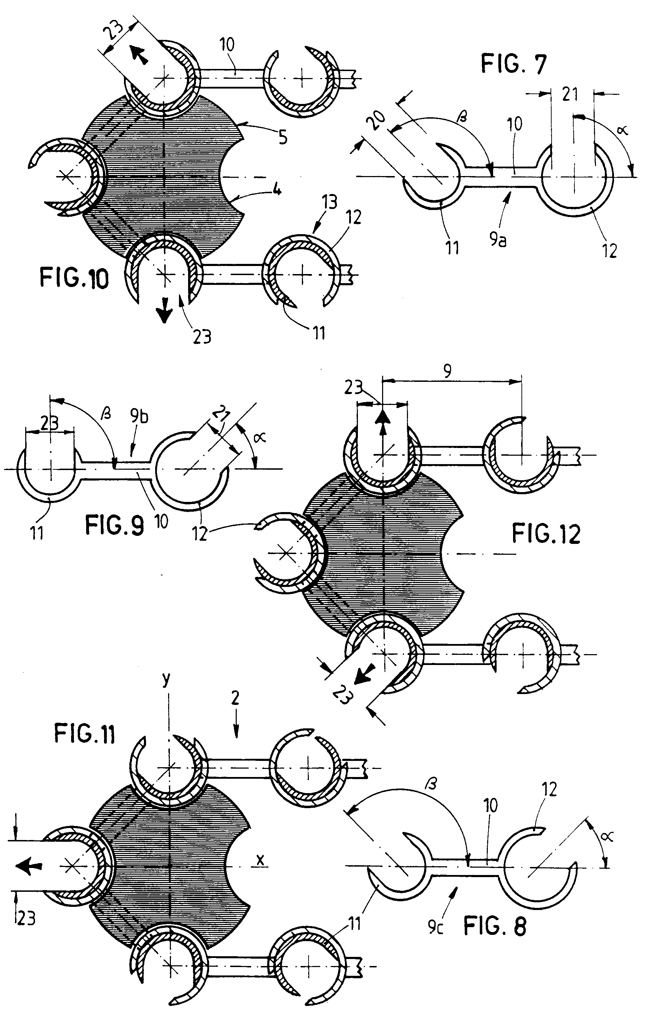

Die Konfiguration des Kettengliedes 9a in Fig. 7 ermöglicht die in Fig. 10 - überstimmend mit den Fig. 4 und 5 - dargestellten beiden Zuführ- und Entnahmestellungen in der y-Achse und unter 45° zur y-Achse (bzw. 135° zur Geradlaufrichtung der Kette 2). Dabei beträgt der Winkel α für den Ausschnitt 21 in der Hohlhülse 12 90° und der Winkel β für den Ausschnitt 20 in der Hohlhülse 11 135°.

Bei der Konfiguration 9b beträgt der Winkel α des Ausschnitts 21 45° und der Winkel β des Ausschnitts 20 90°; mit dieser Ausbildungsweise sind die in Fig. 12 dargestellten Zuführ- und Entnahmestellungen Zu/En in der y-Achse und unter 45° zur y-Achse erreichbar; diese Stellungen sind invers zu den Stellungen gemäss Fig. 10.

Mit den in Fig. 9c dargestellten Ausschnitten 20, 21 um 45° geneigt beim Winkel α in der Hohlhülse 12 um 135° geneigt beim Winkel β in der Hohlhülse 11 ist nur eine Zuführ- bzw. Entnahmestellung erreichbar, nämlich in der x-Achse, wie aus Fig. 11 ersichtlich ist.

Mit den drei gezeigten Konfigurationen von Ausschnitten 20, 21 gemäss den Fig. 7 bis 9 sind fünf Positionen für das Entnehmen von Werkzeugen erreichbar; sollen noch Zwischenpositionen ermöglicht werden, dann müssen die Ausschnitte 20, 21 entsprechend abweichende Winkelstellungen α und β erhalten.

## Patentansprüche

1. Kettenmagazin zur Aufnahme von Bearbeitungswerkzeugen (8) für Bearbeitungsmaschinen, insbesondere Werkzeugmaschinen, bestehend aus einer Endloskette, die mit Aufnahmevorrichtungen für Bearbeitungswerkzeuge (8) versehen und von wenigstens zwei Kettenrädern (3) angetrieben und mittels Führungselementen bis an die Teilkreisdurchmesser der Antriebs- oder Umlenkkettenräder geführt ist,
gekennzeichnet durch
a) aus einem Stegteil (10) und zwei beidendig mit diesem verbundenen, die Kettengelenke (13) bildenden Hohlhülsen (11, 12) unterschiedlichen Durchmessers bestehende Kettenglieder (9),
b) in den sich mit leichtem Bewegungsspiel gegenseitig umschliessenden Hohlhülsen (11, 12) coaxial zu den Gelenkachsen (Z) angeordnete Aufnahmevorrichtungen für Bearbeitungswerkzeuge (8), sowie
c) auf die Mittelachsen (19) der Aufnahmevorrichtungen ausgerichtete, beabstandete Parallelflächen aufweisende, schachtähnliche Ausschnitte (21, 22) in jeder der Hohlhülsen (11, 12), welche in der jeweiligen Zuführungs- bzw. Entnahmestellung (Zu/En) des Kettengelenks (13) einen offenen Zuführ- bzw. Entnahmekanal (23) bilden.

2. Kettenmagazin nach Anspruch 1, dadurch gekennzeichnet, dass die jeweilige (äussere) Hohlhülse (12), welche die (innere) Hohlhülse (11) kleineren Durchmessers umschliesst, auf einem Sektor (14) ihres Umfanges eine Ausnehmung von der Dicke (h) des Stegteils (10) aufweist.

3. Kettenmagazin nach Anspruch 1, dadurch gekennzeichnet, dass die Zahnlücken (4) des Kettenrads (3) die Lager für die gelenkbildenden (äusseren) Hohlhülsen (12) grösseren Durchmessers bilden.

4. Kettenmagazin nach Anspruch 1, dadurch gekennzeichnet, dass die Kettenräder (3) aus zwei beabstandeten Kettenradscheiben bestehen, (3, 30) in welche die beidseitigen freien (äusseren) Hohlhülsen (12) grösseren Durchmessers eingreifen und zwischen denen die Stegteile (10) der Kette (2) laufen.

5. Kettenmagazin nach Anspruch 1, dadurch gekennzeichnet, dass die gelenkbildenden, in die Zahnlücken (4) zwischen den Kettenradzähnen (5) eingreifenden Hohlhülsen (11, 12) mit dem Stegteil (10) einstückig verbunden sind.

6. Kettenmagazin nach Anspruch 1, dadurch gekennzeichnet, dass die gelenkbildenden, in die Zahnlücken (4) zwischen den Kettenradzähnen (5) eingreifenden Hohlhülsen (12) mittels eines aus zwei beabstandeten Laschen bestehenden Stegteils miteinander verbunden sind.

7. Kettenmagazin nach Anspruch 6, dadurch gekennzeichnet, dass die beiden Laschen des Stegteils der Kettenglieder (9) beidseitig das Einscheiben-Kettenrad (3) umgeben.

8. Kettenmagazin nach Anspruch 1, dadurch gekennzeichnet, dass die Stegteile (10) mit Führungsrollen versehen sind.

9. Kettenmagazin nach Anspruch 2, dadurch gekennzeichnet, dass die die jeweils äussere, die innere Hohlhülse kleineren Durchmessers (11) umschliessende (grössere) Hohlhülse (12) mit von den Zahnlücken (4) der Kettenräder (3) aufgenommenen Laufrollen versehen sind.

10. Kettenmagazin nach Anspruch 1, dadurch gekennzeichnet, dass die Aufnahmevorrichtungen für Bearbeitungswerkzeuge mit Klemmorganen (6) zur lösbaren Halterung der Bearbeitungs-Werkzeuge (8) versehen sind.

## Claims

1. Chain magazine for holding machining tools (8) of machining equipment, especially machine tools, comprising an endless chain provided with holding fixtures for machining tools (8), driven by at least two chain wheels (3) and conducted by guiding elements up to the reference diameters of the driving or idle chain wheels,
characterized by
a) chain links (9), each comprising a bridge part (10) and two bushes (11, 12) of different diameter forming the chain joints (13) which, atboth ends,have been connected to this bridge part,
b) holding fixtures for machining tools (8) which have been arranged coaxially to the joint axes (Z) within the bushes (11, 12) enclosing each other with a light motional play, as well as
c) pit-like cutouts (21, 22) with spaced parallel faces, adjusted to the centre axes (19) of the holding fixtures, to be found in each bush (11, 12) and forming an open load or unload groove (23) in the respective feed or removal position of the chain joint (13).

2. Chain magazine according to claim 1, characterized in that the respective (outside) bush (12) enclosing the (inside) bush (11) of a smaller diameter shows, with a certain sector (14) of its periphery, a recess corresponding to the thickness (h) of the bridge part (10).

3. Chain magazine according to claim 1, characterized in that the tooth spaces (4) of the chain wheel (3) will support the jointing (outside) bushes (12) of greater diameter.

4. Chain magazine according to claim 1, characterized in that the chain wheels (3) consist of two spaced chain wheel disks (3, 30) which allow the engagement of the free (outside) bushes (12) of greater diameter, arranged at both sides, and between these disks, the bridge parts (10) of the chain (2) will be running.

5. Chain magazine according to claim 1, characterized in that the jointing bushes (11, 12) engaging the tooth spaces (4) between the chain wheel teeth (5) have been linked to the bridge part (10) to form a single component.

6. Chain magazine according to claim 1, characterized in that the jointing bushes (12) engaging the tooth spaces (4) between the chain wheel teeth (5), have been linked, one to the other, by a bridge part comprising two spaced straps.

7. Chain magazine according to claim 6, characterized in that the two straps of the bridge part of the chain links (9) enclose the one-disk chain wheel (3) at both sides.

8. Chain magazine according to claim 1, characterized in that the bridge parts (10) have been provided with guide rollers.

9. Chain magazine according to claim 2, characterized in that each (larger) outside bush (12) encircling the inside bush of smaller diameter (11), has been provided with running rollers which will be received by the tooth spaces (4) of the chain wheels (3).

10. Chain magazine according to claim 1, characterized in that the holding fixtures for machining tools have been fitted with clamping elements (6) allowing the detachable fixing of the machining tools (8).

## Revendications

1. Magasin à chaîne pour loger des outils d'usinage (8) destinés à des ensembles d'usinage, particulièrement à des machines-outils, comprenant une chaîne sans fin dotée des dispositifs de raccordement d'outil pour des outils d'usinage (8), entraînée par, au moins, deux roues à chaîne (3) et conduite par des éléments de guidage jusqu'aux diamètres primitifs de référence des roues à chaîne d' entraînement ou de renvoi,
caractérisé par
a) des maillons (9) comportant un étai (10) auquel ont été connecté,auxdeux bouts, les deux douilles (11, 12) de diamètre différent formant les articulations de chaîne (13),
b) des dispositifs de raccordement pour des outils d'usinage (8) disposés dans les douilles (11, 12) qui s'entourent mutuellement avec un jeu de mouvement léger, coaxialement aux axes d'articulation (Z), ainsi que
c) des évidements similaires à une gaine (21, 22) avec chacune des douilles (11, 12), orientés vers les axes centraux (19) des dispositifs de raccordement d'outil et présentant des faces parallèles espacées, évidements formant à la position respective d'alimentation ou de reprise de l'articulation de chaîne (13), un passage ouvert (23) pour l'amenée ou le déchargement.

2. Magasin à chaîne selon revendication 1, caractérisé par ce que la douille (12) (extérieure) respective qui entoure la douille (11) (intérieure) de diamètre réduit, présente sur un secteur (14) de sa circonférence, un creux correspondant à l'épaisseur (h) de l'étai (10).

3. Magasin à chaîne selon revendication 1, caractérisé par ce que les vides (4) de la roue à chaîne (3) représentent les points d'appui pour les douilles (12) (extérieures) de diamètre plus grand et formant des articulations.

4. Magasin à chaîne selon revendication 1, caractérisé par ce que les roues à chaîne (3) comprennent chaque fois deux disques de roue à chaîne (3, 30) dans lesquels s'engrènent les douilles libres (extérieures) (12), disposées des deux côtés et présentant un diamètre plus grand, et entre lesquels courent les étais (10) de la chaîne (2).

5. Magasin à chaîne selon revendication 1, caractérisé par ce que les douilles (11, 12) formant des articulations et s'engrenant dans les vides (4) entre les dents de roue à chaîne (5), ont été reliées à l'étai (10) de telle façón que les trois éléments sont devenus une seule pièce.

6. Magasin à chaîne selon revendication 1, caractérisé par ce que les douilles (12) formant des articulations et s'engrenant dans les vides (4) entre les dents de roue à chaîne (5), ont été reliées, l'une à l'autre, par un étai comportant deux éclisses espacées.

7. Magasin à chaîne selon revendication 6, caractérisé par ce que les deux éclisses d'étai des maillons (9) enceignent la roue à chaîne disque unique (3) des deux côtés.

8. Magasin à chaîne selon revendication 1, caractérisé par ce que les étais (10) ont été pourvus des galets de guidage.

9. Magasin à chaîne selon revendication 2, caractérisé par ce que la douille (12) (extérieure et plus grande) respective qui cerne la douille (11) intérieure de diamètre réduit, a été dotée des galets de roulement reçus par les vides (4) des roues à chaîne (3).

10. Magasin à chaîne selon revendication 1, caractérisé par ce que les dispositifs de raccordement pour outils d'usinage ont été munis des organes de serrage (6) permettant la fixation détachable des outils d'usinage (8).
